# EUROPÄISCHE PATENTSCHRIFT

(11) **EP 0 949 576 B1**
(45) Veröffentlichungstag und Bekanntmachung des Hinweises auf die Patenterteilung: **22.12.1999**
(21) Anmeldenummer: 98102790.7
(22) Anmeldetag: 17.02.1998
(51) Int. Cl.: G06K 7/08

(54) **Datenträger und Verfahren zum kontaktlosen Empfang von Daten und Energie**
Data carrier and method for wireless reception of data and energy
Support de données et méthode pour une réception sans fil de données et d'énergie

(43) Veröffentlichungstag der Anmeldung: 13.10.1999
(73) Patentinhaber: SIEMENS AKTIENGESELLSCHAFT, 80333 München (DE)
(72) Erfinder: Reiner, Robert, 85579 Neubiberg (DE)

(56) Entgegenhaltungen:
- FR-A- 2 751 148
- PATENT ABSTRACTS OF JAPAN vol. 016, no. 547 (P-1452), 17. November 1992 & JP 04 205586 A (MITSUBISHI HEAVY IND LTD), 27. Juli 1992

## Beschreibung

Die Erfindung betrifft einen Datenträger entsprechend dem Oberbegriff des Anspruchs 1 mit einer Spule für den kontaktlosen Empfang von Daten und Energie und zum kontaktlosen Senden von Daten sowie mit einer logischen Schaltung zum Verarbeiten und Speichern der empfangenen, demodulierten und decodierten Daten. Ein solcher Datenträger ist aus FR-A-2 751 148 bekannt.

Solche Datenträger werden derzeit in erster Linie als sogenannte kontaktlose Chipkarten oder, wenn sie außer der kontaktlosen Schnittstelle noch Kontakte aufweisen, auch als sogenannte Kombikarten oder Dual Interface Karten eingesetzt. Ihre Verwendung ist jedoch nicht auf die Kartenform beschränkt, da sie auch schon in Armbanduhren und Anhängern vorgeschlagen wurde, beispielsweise bei Skiliften.

In der ISO-Norm 14443 für das kontaktlose Interface solcher Chipkarten werden derzeit zwei verschiedene Modulationsarten für die Daten, die von einer Schreib/Lesestation an eine Karte gesandt werden, aufgeführt, nämlich die reine Austastung des Trägers, die auch als On-Off-Keying bezeichnet wird und den Arbeitstitel ASK100% trägt und eine ASK-Modulation mit einem Modulationsgrad von 5% bis 15%, die den Arbeitstitel ASK10% trägt. Wenn im folgenden von ASK10% oder von 10%-ASK-modulierten Signalen die Rede ist, ist eine Modulationsart gemeint, wie sie in der ISO-Norm 14443 definiert ist.

Mit diesen Modulationsarten sind unterschiedliche Bitcodierungen verbunden. So wird mit der ASK100% eine Pulspositionscodierung verwendet. Die Modulationsart und Bitcodierung der Daten, die von einer Chipkarte zu einer Schreib/Lesestation gesandt werden, können ebenfalls unterschiedlich sein.

Die ASK100% hat dabei den Vorteil, leicht demodulierbar zu sein, da lediglich eine Austastlücken-Erkennungsschaltung nötig ist. Allerdings fehlt bei dieser Modulationsart während der Austastlücke der Takt und im Frequenzspektrum entstehen relativ starke Seitenbänder.

Die ASK10% ermöglicht demgegenüber eine ständige Taktversorgung und ist mit wesentlich niedrigerem Pegel der Seitenbänder verbunden, ist aber schwierig zu demodulieren, weil einerseits die Entfernung zwischen Karte und der Schreib/Lesestation stark schwanken kann, die Schaltungen auf der Kartenseite eine stark schwankende Stromaufnahme haben und die schaltungstechnischen Möglichkeiten für die Demodulatorschaltung beschränkt sind, da keine genügend konstante und ausreichend hohe Spannungsversorgung verfügbar ist.

Es ist Aufgabe der Erfindung, einen Datenträger der genannten Art anzugeben, der den Empfang beider Modulationsarten ermöglicht und dabei eindeutige Daten liefert.

Die Aufgabe wird durch einen Datenträger gemäß Anspruch 1 und ein Verfahren zum Betreiben eines solchen Datenträgers gemäß Anspruch 5 gelöst. Vorteilhafte Weiterbildungen der Erfindung sind in den Unteransprüchen angegeben.

Gemäß Anspruch 1 sind zwei Demodulatoren vorgesehen, die jeweils 100%-ASK- bzw. 10%-ASK-modulierte Signale demodulieren können, wobei beim Empfang eines 100%-ASK-modulierten Signals, also beim Empfang der ersten Austastlücke der 10%-ASK-Demodulator deaktiviert wird, da er 100%-ASK-modulierte Signale zwar empfangen kann, jedoch die anschließende Decodierung völlig falsche Ergebnisse liefert. Durch den erfindungsgemäßen Datenträger ist also sichergestellt, daß immer eine eindeutige Demodulation und Decodierung erfolgt.

In Weiterbildung der Erfindung wird nach dem Empfang des ersten Datenbits eines 10%-ASK-modulierten Signals der 100%-ASK-Demodulator deaktiviert. Diese Maßnahme sorgt für einen eindeutigen Zustand der Schaltung.

Alternativ kann in vorteilhafter Ausbildung des Erfindungsgegenstandes der den Empfang einer Austastlücke anzeigende Ausgang des 100%-ASK-Demodulators nach dem Empfang eines 10%-ASK-Datenbits mit dem Reset-Eingang der logischen Schaltung des Datenträgers verbunden werden, so daß der gesamte Datenträger zurückgesetzt wird, da das Auftreten einer Austastlükke bei einem 10%-ASK-modulierten Signal auf einen Fehler oder eine Manipulation hindeutet.

In Weiterbildung der Erfindung ist ein von den Demodulatoren ansteuerbares Statusregister zur Anzeige, welcher Demodulator aktiv ist, vorgesehen, das von der logischen Schaltung beispielsweise über einen gemeinsamen Bus abgefragt werden kann.

Da sich die Leistungsübertragung beim Empfang eines 10%-ASK-modulierten Signals wesentlich von der beim Empfang eines 100%-ASK-modulierten Signals unterscheidet, ist in weiterer Ausbildung der Erfindung vorgesehen, eine Spannungsversorgungseinrichtung abhängig vom Zustand des Statusregisters durch die logische Schaltung anzusteuern, so daß eine optimale Einstellung erreicht wird. Alternativ hierzu könnte die Ansteuerung auch durch die Demodulatoren erfolgen.

Die Erfindung wird nachfolgend anhand eines Ausführungsbeispiels mit Hilfe von Figuren näher erläutert. Dabei zeigen:
- Figu: r 1 eine Prinzipschaltung für einen erfindungsgemäßen Datenträger,
- Figur 2: eine detaillierte Schaltung für einen 100%-ASK-Demodulator,
- Figur 3: Spannungsverläufe für die Schaltung gemäß Figur 2,
- Figur 4: eine detaillierte Schaltung für einen 10%-ASK-Demodulator und
- Figur 5: Spannungsverläufe für die Schaltung gemäß Figur 4.

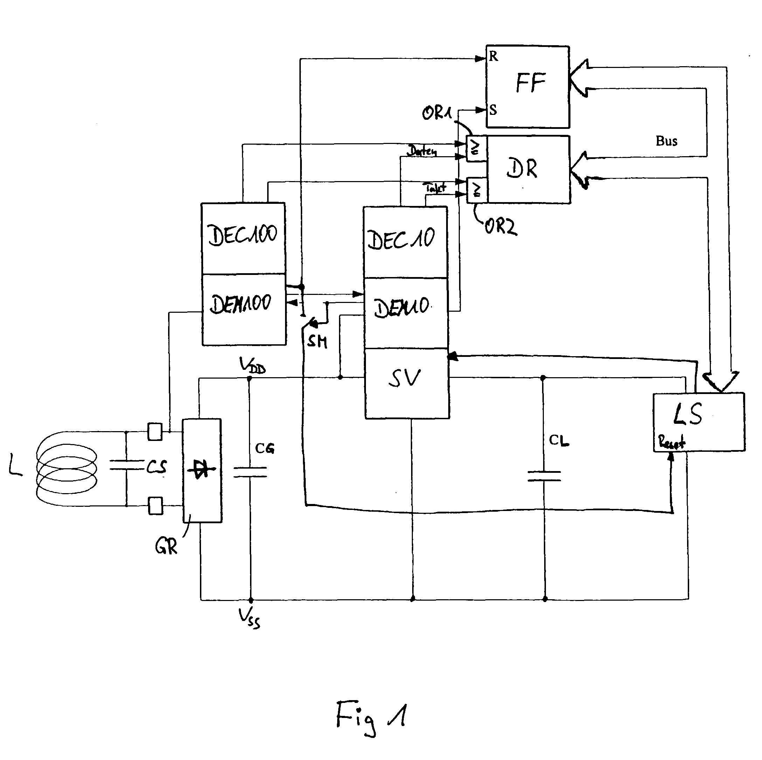

In Figur 1 ist ein Schwingkreis aus einer Spule L und einem Kondensator CS mit dem Eingang einer Gleichrichterschaltung GR verbunden. Der Ausgang der Gleichrichterschaltung GR ist mit einem Glättungskondensator CG verbunden, an dessen Klemmen die Versorgungsspannungen V_{DD} und V_{SS} abgreifbar sind. Die Versorgungsspannungen V_{DD}, V_{SS} werden einer Spannungsversorgungseinrichtung SV zugeführt, die insbesondere Regelglieder enthält, um ausgangsseitig eine möglichst konstante Spannungsversorgung für die nachgeschalteten Schaltkreise zur Verfügung stellen zu können. Der Ausgang der Spannungsversorgungseinrichtung SV ist in der Schaltung gemäß Figur 1 exemplarisch mit einer logischen Schaltung LS verbunden. Es versteht sich jedoch von selbst, daß auch alle anderen Schaltungseinheiten mit der Versorgungsspannung beaufschlagt sind.

Die Prinzipschaltung zeigt außerdem einen ersten Demodulator DEM100 zur Demodulation von 100%-ASK-modulierten Signalen. Dieser wird mit dem hochfrequenten Signal, wie es am Schwingkreis L, CS anliegt, beaufschlagt. Der erste Demodulator DEM100 ist mit einer ersten Decodierschaltung DEC100 verbunden, die das demodulierte Signal decodiert und die daraus abgeleiteten Daten dem ersten Eingang eines ersten ODER-Gatters OR1 und das daraus abgeleitete Taktsignal dem ersten Eingang eines zweiten ODER-Gatters OR2 zuführt.

Der erste Demodulator DEM100 weist außerdem einen ersten Ausgang auf, der mit einem ersten Eingang R eines als Flip-Flop ausgebildeten Statusregisters FF verbunden ist.

Einem zweiten Demodulator DEM10 zur Demodulation von 10%-ASK-modulierten Signalen wird als zu demodulierendes Signal die gleichgerichtete und geglättete, jedoch noch nicht geregelte Versorgungsspannung V_{DD} an dessen Eingang zugeführt. Es versteht sich dabei von selbst, daß auch das Bezugspotential V_{SS} ebenso wie an allen anderen Schaltungsteilen am zweiten Demodulator DEM10 anliegt. Dies ist in Figur 1 aus Übersichtlichkeitsgründen nicht explizit dargestellt.

Der zweite Demodulator DEM10 ist mit einer zweiten Decodierschaltung DEC10 verbunden, deren Datenausgang mit dem zweiten Eingang der ersten ODER-Schaltung OR1 und deren Taktausgang mit dem zweiten Eingang der zweiten ODER-Schaltung OR2 verbunden ist. Ein Ausgang des zweiten Demodulators DEM10 ist mit einem zweiten Eingang S des Statusregisters FF verbunden.

Der erste Demodulator DEM100 weist einen weiteren Ausgang auf, der mit einem Deaktiviereingang des zweiten Demodulators DEM10 verbunden ist. Prinzipiell könnte statt des weiteren Ausgangs des ersten Demodulators DEM100 auch dessen mit dem Statusregister FF verbundener erster Ausgang mit dem Deaktiviereingang des zweiten Demodulators DEM10 verbunden werden.

In gleicher Weise weist der zweite Demodulator DEM10 einen Ausgang auf, der entweder, strichliert angedeutet, mit einem Deaktiviereingang des ersten Demodulators DEM100 verbunden ist oder, mit durchgezogenen Linien dargestellt, ein Schaltmittel SM ansteuert, das den mit dem Statusregister FF verbundenen ersten Ausgang des ersten Demodulators DEM100 mit einem Reset-Eingang der logischen Schaltung LS verbindet.

Die beiden ODER-Gatter OR1, OR2 sind mit einem Datenregister DR verbunden, in das die empfangenen Daten mittels dem aus dem empfangenen Signal abgeleiteten Taktsignal eingeschrieben werden. Das Taktsignal steht selbstverständlich auch für andere Schaltungsteile wie beispielsweise die logische Schaltung LS zur Verfügung. Das Statusregister FF, das Datenregister DR und die logische Schaltung LS sind beispielsweise, wie in der Figur 1 dargestellt, über einen Bus miteinander verbunden.

Ein Ausgang der logischen Schaltung LS ist mit einem Eingang der Spannungsversorgungseinrichtung SV verbunden, so daß abhängig vom Zustand des Statusregisters FF und damit abhängig von der empfangenen Modulationsart die Spannungsversorgungseinrichtung SV durch die logische Schaltung LS optimal eingestellt werden kann.

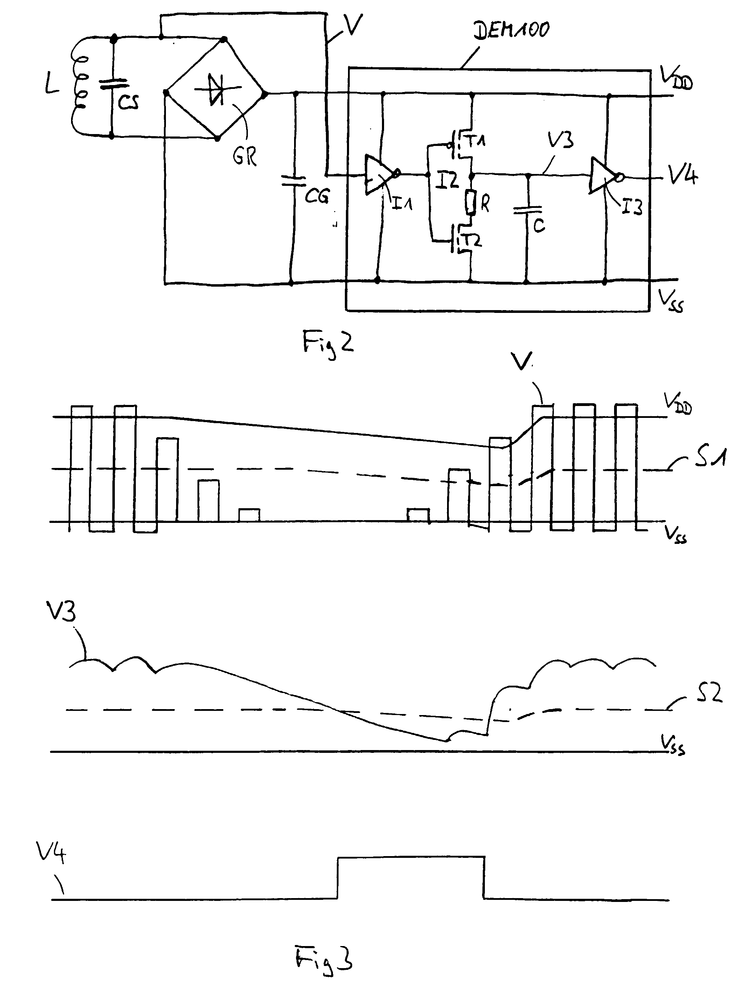

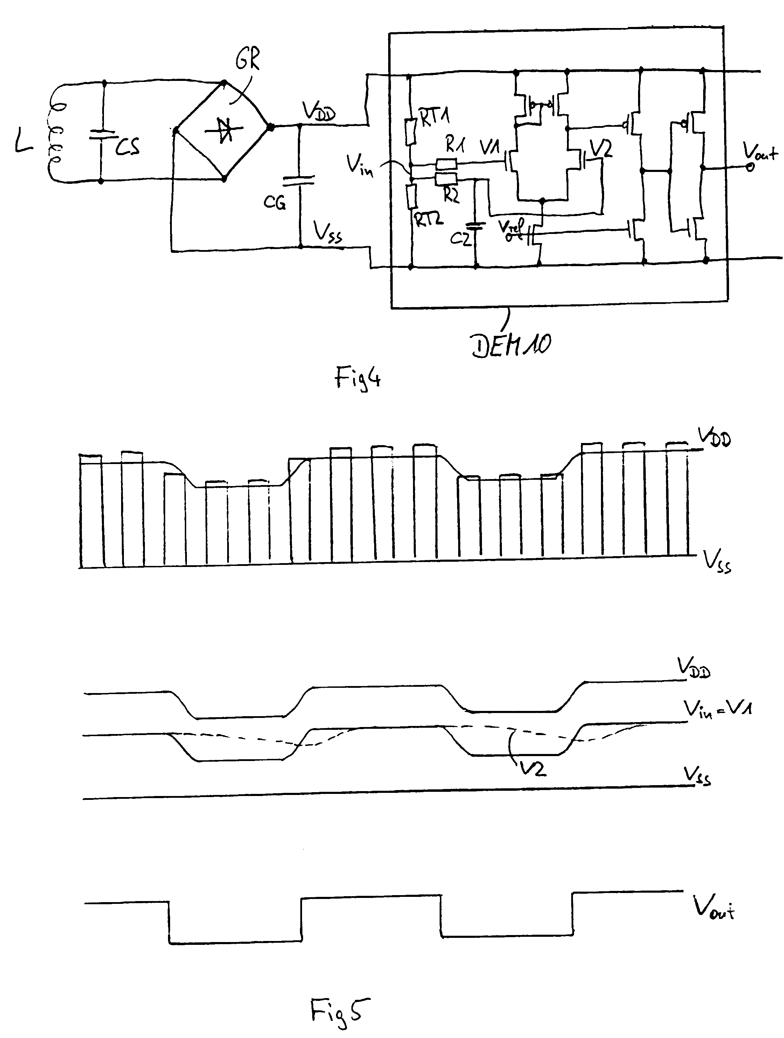

Im folgenden soll die Funktion eines 100%-ASK-Demodulators DEM100 anhand eines Ausführungsbeispiels mittels der Figuren 2 und 3 dargestellt und erläutert werden. Gleiche Schaltungsteile, wie sie bereits in Figur 1 dargestellt sind, sind mit gleichen Bezugszeichen versehen.

Der 100%-ASK-Demodulator DEM100 ist im wesentlichen mit drei hintereinandergeschalteten CMOS-Invertern I1, I2, I3 gebildet, wobei der mittlere Inverter I2 mit unterschiedlich leitfähigen Transistoren T1, T2 ausgebildet ist. Außerdem ist dem n-Kanal-Transistor T2 des zweiten Inverters I2 ein Widerstand R vorgeschaltet. Parallel zur Serienschaltung aus dem Widerstand R und der Laststrecke des n-Kanal-Transis-tors T2 ist ein Kondensator C angeordnet. Der Eingang des ersten Inverters I1 wird mit dem am Schwingkreis L, CS anliegenden hochfrequenten Signal V beaufschlagt, während der Ausgang des dritten Inverters I3 das demodulierte Ausgangssignal V4 bildet.

Im oberen Teil der Figur 3 ist das hochfrequente, 100%-ASK-modulierte Signal V dargestellt, wie es am Schwingkreis L, CS anliegt. Im dargestellten Beispiel ist eine Austastlücke gezeigt. Im oberen Teil der Figur 3 ist ebenfalls der aus diesem Signal abgeleitete prinzipielle Verlauf der Versorgungsspannungen V_{DD} und V_{SS} eingezeichnet. Abhängig von diesen Versorgungsspannungen V_{DD}, V_{SS} ergibt sich eine Schaltschwelle S1 des ersten Inverters I1, die strichliert dargestellt ist. Im mittleren Teil der Figur 3 ist der Verlauf der Spannung V3 am Kondensator C und, ebenfalls strichliert, der Verlauf der Schaltschwelle S2 des zweiten Inverters I2 bezogen auf das Bezugspotential V_{SS} dargestellt. Aus dem relativen Verlauf der Spannung V3 in bezug auf die Schaltschwelle S2 ergibt sich der im unteren Teil der Figur 3 dargestellte Verlauf des Ausgangssignals V4 des dritten Inverters I3.

Wie aus Figur 3 zu entnehmen ist, kann mit einer Demodulatorschaltung DEM100 gemäß Figur 2 eine Austastlücke, wie sie im oberen Teil der Figur 3 dargestellt ist, mit einer durch den Widerstand R und den Kondensator C einstellbaren Verzögerung detektiert werden. Zur Codierung der von einer Schreib/Lesestation an den Datenträger zu übertragenden Daten wird derzeit bei einer 100%-ASK-Modulation eine Pulspositionscodierung verwendet, bei der also die Information durch die Position der Austastlücke innerhalb eines auszuwertenden Zeitfensters maßgebend für die Information ist (siehe ISO/IEC 14443-2). Zur Decodierung können hierzu in der ersten Decodierschaltung DEC100 die aus der Hochfrequenzschwingung abgeleiteten Taktimpulse vom Beginn des Zeitfensters bis zum Beginn der Austastlücke gezählt und ausgewertet werden.

Ein Ausführungsbeispiel für einen 10%-ASK-Demodulator DEM10 ist in Figur 4 dargestellt. Auch hier sind gleiche Schaltungsteile, wie sie bereits in Figur 1 dargestellt sind, mit gleichen Bezugszeichen versehen.

Der 10%-ASK- bzw. zweite Demodulator DEM10 ist mit einem dem Fachmann bekannten Differenzverstärker mit nachgeschaltetem Push-Pull-Ausgangstreiber und diesem nachgeschalteten Inverter gebildet. Die Stromquelle des Differenzverstärkers sowie der Pull-Transistor des Ausgangstreibers sind mit einer Referenzspannung V_{REF} beaufschlagt, die in nicht dargestellten Schaltungsteilen aus den Versorgungsspannungen V_{DD}, V_{SS} abgeleitet wird.

Am ersten Eingang des Differenzverstärkers liegt ein Signal V1 an, das über einen Widerstand R1 und einen Spannungsteiler RT1, RT2 aus den Versorgungsspannungen V_{DD}, V_{SS} abgeleitet wird. Am zweiten Eingang des Differenzverstärkers liegt ein Signal V2 an, das ebenfalls aus den Versorgungsspannungen V_{DD}, V_{SS} über den Spannungsteiler RT1, RT2 abgeleitet wird, jedoch zusätzlich über einen mit einem Widerstand R2 und einem Kondensator C2 gebildeten Tiefpaß geführt wird. Hierdurch werden die aufgrund der Amplitudenmodulation auftretenden Änderungen in der Amplitude der Versorgungsspannung V_{DD} direkt an den ersten Eingang des Differenzverstärkers und zeitverzögert an den zweiten Eingang des Differenzverstärkers angelegt. Auf diese Weise können Amplitudenschwankungen detektiert werden.

Die einzelnen Spannungsverläufe sind in Figur 5 dargestellt, aus denen sich die Funktion des zweiten Demodulators DEM10 selbsterklärend ergibt. So ist zu erkennen, daß die Modulation in der Amplitude des am Schwingkreis L, CS anliegenden hochfrequenten Trägersignals in eine entsprechende Amplitudenschwankung der Versorgungsspannung V_{DD} abgebildet wird. Diese wird über den Spannungsteiler RT1, RT2 und den Widerstand R1 bzw. den Tiefpaß R2,C2 an die Eingänge des Differenzverstärkers des zweiten Demodulators DEM10 angelegt. Daraus ergibt sich ein Ausgangssignal V_{OUT}, wie es im unteren Teil der Figur 5 dargestellt ist.

Wie aus einem Vergleich der Figuren 2 und 3 bzw. 4 und 5 zu erkennen ist, kann vom ersten, 100%-ASK-Demodulator DEM100 eine 10%-ASK-Modulation nicht erkannt werden, der erste Demodulator DEM100 wird in diesem Fall also nicht ansprechen. Der zweite Demodulator DEM10 wird jedoch Ausgangssignale an den zweiten Decoder DEC10 liefern, der entsprechend decodierte Daten im Datenregister DR einschreiben wird. Durch ein Signal vom zweiten Demodulator DEM10 wird das Statusregister FF in einen Zustand versetzt, aus dem die logische Schaltung LS erkennen kann, um welche Modulationsart es sich handelt. In vorteilhafter Ausbildung der Erfindung kann durch Steuerung der logischen Schaltung LS die Spannungsversorgungseinrichtung SV auf einen optimalen Wert eingestellt werden.

Der zweite Demodulator DEM10 kann entweder den ersten Demodulator DEM100 deaktivieren oder einen Ausgang dieses ersten Demodulators DEM100, der anzeigt, daß eine Austastlücke empfangen wurde, über ein Schaltmittel SM an einen Reseteingang der logischen Schaltung LS schalten. Hierdurch kann in vorteilhafter Weise ein möglicher Fehler oder ein Mißbrauch wirkungsvoll verhindert werden.

Eine Deaktivierung des ersten Demodulators DEM100 bzw. Betätigung des Schaltmittels SM darf allerdings erst erfolgen, nachdem feststeht, daß es sich wirklich um eine echtes ASK10%-Signal handelt und nicht um eine Störung oder den Beginn eines ASK100%-Signals, also frühestens nachdem das erste Datenbit einer 10%-ASK-Modulation vollständig empfangen wurde. Erst dann ist sichergestellt, daß der erste Demodulator DEM100 nicht mehr ansprechen wird, da es sich nicht um eine Austastlücke handeln kann. Es kann sogar vorteilhaft sein, den Empfang mehrerer Bits abzuwarten, z.B. ein komplettes Byte, um dann prüfen zu können, z.B. durch die Start- und Stop-Bits, ob es sich zweifelsfrei um eine ASK10%-Modulation handelt.

Wenn jedoch der erste Demodulator DEM100 zuerst eine Austastlücke detektiert, muß sofort der zweite Demodulator DEM10 deaktiviert werden, da dieser, wie aus einem Vergleich der Figuren 2, 3 bzw. 4, 5 zu erkennen ist, durchaus in der Lage ist, eine 100%-ASK-Modulation zu demodulieren, jedoch aufgrund der üblicherweise unterschiedlichen Bitcodierung falsche Daten liefern würde.

Um ein Funktionieren der Schaltung zu gewährleisten, müssen nach einem Power-Up, also nachdem genügend Energie empfangen wurde, beide Demodulatoren und Decoder in Betrieb sein, um ein einwandfreies Funktionieren der einzelnen Schaltungsteile zu gewährleisten. Die Spannungsversorgungseinrichtung SV ist dabei in vorteilhafter Weise anfänglich in einem Zustand, der eine Demodulation einer 10%-ASK-Modulation erlaubt. In diesem Zustand ist ein Empfang einer 100%-ASK-Modulation noch möglich, möglicherweise jedoch nur mit verringerter Reichweite.

## Patentansprüche

1. Datenträger, insbesondere Chipkarte,
- mit einer Spule (L) für den kontaktlosen Empfang von Daten und Energie und zum kontaktlosen Senden von Daten,
- mit einer logischen Schaltung (LS) zum Verarbeiten der empfangenen, demodulierten und dekodierten Daten,
- mit einem ersten Demodulator (DEM100) zur Demodulation von empfangenen 100%-ASK-modulierten Signalen,
- und mit einem zweiten Demodulator (DEM10)
**dadurch gekennzeichnet,**
- daß der zweite Demodulator zur Demodulation von empfangenen ASK-modulierten Signalen mit einem Modulationsgrad von weniger als 100% dient und durch den ersten Demodulator (DEM100) derart angesteuert wird, daß er beim Empfang eines 100%-ASK-modulierten Signals durch den ersten Demodulator (DEM100) deaktiviert wird.

2. Datenträger nach Anspruch 1, **dadurch gekennzeichnet,** daß ein von der logischen Schaltung (LS) abfragbares Statusregister (FF) vorgesehen ist, das mit den Demodulatoren (DEM10, DEM100) über Steuerleitungen verbunden ist und den jeweils aktiven Demodulator (DEM10 bzw. DEM100) anzeigt.

3. Datenträger nach Anspruch 1 oder 2, **dadurch gekennzeichnet,** daß eine Spannungsversorgungseinrichtung (SV) mit der logischen Schaltung (LS) über eine Steuerleitung verbunden ist, so daß abhängig von der Modulationsart des gerade empfangenen Signals die Spannungsversorgungseinrichtung (SV) optimal einstellbar ist.

4. Datenträger nach einem der Ansprüche 2 oder 3, **dadurch gekennzeichnet,** daß der das Statusregister (FF) ansteuernde Ausgang des ersten Demodulators (DEM100) über ein vom zweiten Demodulator (DEM10) ansteuerbares Schaltmittel (SM) mit einem Reset-Eingang der logischen Schaltung (LS) verbunden ist.

5. Verfahren zum Betreiben eines Datenträgers nach einem der Ansprüche 1 bis 4, **dadurch gekennzeichnet**,
daß der erste Demodulator (DEM100) den zweiten Demodulator (DEM10) beim Empfang der ersten Austastung deaktiviert und der zweite Demodulator (DEM10) den ersten Demodulator (DEM100) frühestens nach dem Empfang des ersten Datenbits deaktiviert.

6. Verfahren zum Betreiben eines Datenträgers nach Anspruch 4, **dadurch gekennzeichnet**,
daß der erste Demodulator (DEM100) den zweiten Demodulator (DEM10) beim Empfang der ersten Austastung deaktiviert und beim Auftreten einer Austastung während des Empfangs eines ASK-modulierten Signals mit einem Modulationsgrad von weniger als 100% die logische Schaltung (LS) zurückgesetzt wird.

7. Verfahren nach einem der Ansprüche 5 oder 6, **dadurch gekennzeichnet**,
daß eine Spannungsversorgungseinrichtung (SV) abhängig vom Zustand des Statusregisters (FF) durch die logische Schaltung (LS) auf einen optimalen Betrieb eingestellt wird.

## Claims

1. Data carrier, in particular chip card,
- having a coil (L) for the contactless reception of data and energy and for the contactless transmission of data,
- having a logic circuit (LS) for processing the received, demodulated and decoded data,
- having a first demodulator (DEM100) for demodulating received 100% ASK-modulated signals,
- and having a second demodulator (DEM10)
characterized in that
- the second demodulator is used for demodulating received ASK-modulated signals with a modulation factor of less than 100% and is driven by the first demodulator (DEM100) in such a way that it is deactivated on reception of a 100% ASK-modulated signal by the first demodulator (DEM100).

2. Data carrier according to Claim 1, characterized in that a status register (FF) which can be interrogated by the logic circuit (LS) is provided, is connected to the demodulators (DEM10, DEM100) via control lines and displays the respectively active demodulator (DEM10 or DEM100).

3. Data carrier according to Claim 1 or 2, characterized in that a voltage supply device (SV) is connected to the logic circuit (LS) via a control line so that the voltage supply device (SV) can be optimally adjusted as a function of the modulation type of the signal just received.

4. Data carrier according to one of Claims 2 and 3, characterized in that the output which belongs to the first demodulator (DEM100) and drives the status register (FF) is connected to a reset input of the logic circuit (LS) via a switching means (SM) which can be driven by the second demodulator (DEM10).

5. Method for operating a data carrier according to one of Claims 1 to 4, characterized in that the first demodulator (DEM100) deactivates the second demodulator (DEM10) on reception of the first blank and the second demodulator (DEM10) deactivates the first demodulator (DEM100) at the earliest after the reception of the first data bit.

6. Method for operating a data carrier according to Claim 4, characterized in that the first demodulator (DEM100) deactivates the second demodulator (DEM10) on reception of the first blank and the logic circuit (LS) is reset if a blank occurs after the reception of an ASK-modulated signal with a modulation factor of less than 100%.

7. Method according to one of Claims 5 and 6, characterized in that a voltage supply device (SV) is adjusted for optimal operation as a function of the state of a status register (FF) by the logic circuit (LS).

## Revendications

1. Support de données, notamment carte à puce, comportant
- une bobine (L) pour la réception sans contact de données et d'énergie et pour l'émission sans contact de données,
- un circuit logique (LS) pour le traitement des données reçues, démodulées et décodées,
- un premier démodulateur (DEM100) pour la démodulation de signaux reçus modulés en ASK 100 %,
- et un deuxième démodulateur (DEM10),
**caractérisé par le fait que**
- le deuxième démodulateur sert à la démodulation de signaux reçus modulés en ASK avec un taux de modulation inférieur à 100 % et est commandé par le premier démodulateur (DEM100) de telle sorte qu'il est désactivé lors de la réception d'un signal modulé en ASK 100 % par le premier démodulateur (DEM100).

2. Support de données selon la revendication 1, **caractérisé par le fait qu**'il est prévu un registre d'état (FF) qui est interrogeable par le circuit logique (LS), qui est relié aux démodulateurs (DEM10, DEM100) par l'intermédiaire de lignes de commande et qui indique le démodulateur (DEM10 ou DEM100) respectivement actif.

3. Support de données selon la revendication 1 ou 2, **caractérisé par le fait qu'**un dispositif d'alimentation en tension (SV) est relié au circuit logique (LS) par l'intermédiaire d'une ligne de commande de telle sorte que le dispositif d'alimentation en tension (SV) peut être réglé de manière optimale en fonction du type de modulation du signal reçu à un moment donné.

4. Support de données selon l'une des revendications 2 ou 3, **caractérisé par le fait que** la sortie, commandant le registre d'état (FF), du premier démodulateur (DEM100) est reliée par l'intermédiaire d'un moyen de commutation (SM) commandable par le deuxième démodulateur (DEM10) à une entrée de remise à l'état initial du circuit logique (LS).

5. Procédé pour exploiter un support de données selon l'une des revendications 1 à 4, **caractérisé par le fait que** le premier démodulateur (DEM100) désactive le deuxième démodulateur (DEM10) lors de la réception du premier intervalle de suppression et le deuxième démodulateur (DEM10) désactive le premier démodulateur (DEM100) au plus tôt après la réception du premier bit de données.

6. Procédé pour exploiter un support de données selon la revendication 4, **caractérisé par le fait que** le premier démodulateur (DEM100) désactive le deuxième démodulateur (DEM10) lors de la réception du premier intervalle de suppression et, lors de la réception d'un intervalle de suppression après la réception d'un signal modulé en ASK avec un taux de modulation inférieur à 100 %, le circuit logique (LS) est remis à l'état initial.

7. Procédé selon l'une des revendications 5 ou 6, **caractérisé par le fait qu'**on règle sur un fonctionnement optimal le dispositif d'alimentation en tension (SV) en fonction de l'état du registre d'état (FF) au moyen du circuit logique (LS).
